# EUROPÄISCHE PATENTSCHRIFT

(11) **EP 2 426 042 B1**
(45) Veröffentlichungstag und Bekanntmachung des Hinweises auf die Patenterteilung: **26.02.2014**
(21) Anmeldenummer: 11178741.2
(22) Anmeldetag: 25.08.2011
(51) Int. Cl.: B62M 6/90, B62K 21/02, B62K 19/30, B62J 9/00, B62K 25/08

(54) **Elektrische Antriebseinheit für Fahrräder und Motofahrräder**
Electrical Drive Unit for bicycles and motorcycles
L'unité d'entraînement électrique pour vélos et motos

(30) Priorität: 25.08.2010 CH 13632010
(43) Veröffentlichungstag der Anmeldung: 07.03.2012
(73) Patentinhaber: Biorem AG, 6340 Baar (CH)
(72) Erfinder:
(74) Vertreter: Felber, Josef

(56) Entgegenhaltungen:
- EP-A2- 0 905 015
- GB-A- 2 319 755
- JP-A- 2001 001 969
- JP-A- 2003 154 984
- JP-A- 2006 130 991
- US-A1- 2005 023 794
- US-A1- 2005 156 401

## Beschreibung

Diese Erfindung betrifft eine elektrische Antriebseinheit für Fahrräder, wobei sie sowohl an bestehenden Fahrrädern mit elektrischem Hilfsmotor, an Motorfahrrädern mit Verbrennungsmotoren oder Elektromotoren für den Antrieb des Hinterrades sowie auch an allen bestehenden gewöhnlichen Fahrrädern ohne jeglichen Hilfsantrieb einsetzbar ist. Bestehende Fahrräder und Motorfahrräder sind daher mit dieser Antriebseinheit nachrüstbar. Andrerseits eignet sich diese elektrische Antriebseinheit auch zur Ausstattung von neuen Elektrofahrrädern als deren erster und einziger Elektroantrieb.

Fahrräder mit elektrischem Hilfsantrieb sind in den letzten Jahr zunehmend populär geworden und erfreuen sich einer wachsenden Beliebtheit. Sie machen das Fahrradfahren attraktiver, steigern die Reichweite und helfen auch grosse Steigungen zu überwinden. Damit wird das Fahrradfahren auch älteren oder körperlich weniger trainierten Benützern eröffnet. Es gibt dabei verschiedene elektrische Antriebslösungen. Entweder sind die Fahrräder mit einem elektrischen Nabenmotor ausgerüstet, welcher im Hinterrad, aber auch im Vorderrad montiert sein kann, oder der Elektronmotor sitzt beim Tretlager oder in dessen Nähe und treibt die Tretlager-Kurbelwelle über einen Sekundärantrieb an, etwa über eine Kette, einen Zahnriemen, eine Kurbelwelle oder über ein mechanisches Getriebe. Bisher sind solche Elektrofahrräder in verschiedenen Ausführungen zu kaufen, und sie kosten meistens zwischen CHF 1'000 für Einsteigermodelle bis hin zu CHF 7'000 und mehr für besonders aufwändige und exklusive Ausführungen.

Bei den herkömmlichen Elektrofahrrädern ist oftmals das Tretlager länger, die Pedale stehen also weiter voneinander beabstandet als bei einem normalen Fahrrad. Das kann sich als Nachteil erweisen. Passionierte Radfahrer möchten einen Rahmen am Fahrrad, der genau auf ihren Körperabmessungen angepasst ist und wünschen auch einen optimalen Pedalabstand am Fahrrad, um eine maximale Effizienz zu erreichen. Ideal wäre also ein Elektroantrieb, der diesen Wünschen gerecht wird.

Trotz der grossen Beliebtheitswelle der Elektrofahrräder machen sie immer noch einen verschwindend geringen Anteil am gesamten Bestand von Fahrrädern aus. Wird ein Elektrofahrrad angeschafft, so wird ein vorher eingesetztes Fahrrad meistens stehengelassen und es ist einfach überzählig und wird sogar entsorgt, obwohl es noch völlig intakt ist und sich in technisch einwandfreiem Zustand befindet. Gegenüber dem Elektrofahrrad hat es für seinen Besitzer in den meisten Fällen stark an Attraktivität verloren. Aus GB 2 319 755 A ist eine Konstruktion bekannt, bei welcher das in die Gabel eingesetzte Vorderrad mit einem elektrischen Radnabenmotor ausgerüstet ist. An der Gabel oberhalb des Rades ist eine Batterie lösbar befestigt, mit Versorgungs- und Steuerkabeln längs der Gabel zum Radnabenmotor hin. Der Lenker ist an der Gabel befestigt und mit einer Steuerung für die Leistungsabgabe des Radnabenmotors ausgestattet. Im Prinzip ist hier an einem sonst konventionellen Fahrad bloss das Vorderrad mit einem Vorderrad mit einem Radnabenmotor ersetzt. Die Batterie ist oberhalb und unterhalb des Lenkkopfrohres mittels Klammern (brackets) vor demselben plaziert befestigt. Diese Befestigungsart ist wenig stabil und erlaubt bloss das Mitführen von vergleichsweise leichten Batterien mit entsprechend beschränkter Kapazität. Eine verbesserte Konstruktion muss eine gefederte Telekeskopgabel aufweisen, und eine weit grössere Batterie muss stabil mitgeführt werden können, wobei der Schwerpunkt derselben so nahe wie möglich beim Lenkkopfrohr platziert sein sollte, und die ganze Konstruktion sollte dennoch so stabil sein, dass auch über unwegsames Gelände rasant gefahren werden kann.

Angesichts der Tatsache, dass Elektrofahrräder vergleichsweise teuer in der Anschaffung sind, und andrerseits die wohl allermeisten Käufer eines Elektrofahrrades bereits Besitzer eines Fahrrades sind, stellt sich die vorliegende Erfindung die Aufgabe, eine elektrische Antriebseinheit für Fahrräder zu schaffen, welche nachträglich mit jedem bestehenden Fahrrad kombinierbar ist, bzw. nachträglich an dieses angebaut werden kann, wodurch alle Vorteile eines Elektrofahrrades mit einem bestehenden, noch motorlosen Fahrrad erzielbar werden. Gleichzeitig soll diese elektrische Antriebseinheit eine Reduktion der Anschaffungskosten für ein Elektrofahrrad bieten, um mit weit weniger Geld in den Genuss eines Elektrofahrrades zu kommen, als was für die Anschaffung eines kompletten neuen Elektrofahrrades ausgegeben werden muss. Schliesslich soll die Antriebeinheit es ermöglichen, dass jeder Radfahrer trotz Elektroantrieb mit einem optimal auf seinen Körper angepassten Rahmen und Pedalantrieb und Pedalabstand Rad fahren kann.

Die Aufgabe wird gelöst von einer elektrischen Antriebseinheit für ein Fahrrad oder Motorfahrrad, bestehend aus einer Baueinheit aus Gabel und Lenkkopf, welcher in das Lenkkopfrohr eines Rahmens einsetzbar ist und in diesem schwenkbar sicherbar ist, sowie einem in die Gabel eingesetzten Vorderrad mit elektrischem Radnabenmotor, wobei an der Gabel oberhalb des Rades eine Batterie lösbar befestigbar ist, mit Versorgungs- und Steuerkabeln längs der Gabel zum Radnabenmotor hin, und der Lenker an der Gabel befestigt ist, und mit einer Steuerung für die Leistungsabgabe des Radnabenmotors ausgestattet ist, und die sich dadurch auszeichnet, dass die Gabel aus zwei parallel zueinander verlaufenden Gabelrohren besteht, die an mindestens zwei Stellen mit je einer mechanischen Brücke miteinander verbunden sind, und der Lenkkopf aus einem Rohrstummel mit zentraler Gewindestange besteht, welcher mit seinem unteren Ende auf einer mechanischen Brücke sitzt, welche die beiden Gabelrohre verbindet, wobei eine weitere mechanische Brücke vorhanden ist, welche an den Gabelrohren höhenverstellbar befestigt ist und eine Verschraubung einschliesst, welche auf das obere Ende des Lenkkopfes absenkbar ist und mit dessen Gewindestange zur Sicherung des Lenkkopfes in einem Lenkkopfrohr eines Rahmens verschraubbar ist. Baueinheit aus Gabel und Lenkkopf, welcher in das Lenkkopfrohr eines Rahmens einsetzbar ist und in diesem schwenkbar sicherbar ist, sowie einem in die Gabel eingesetzten Vorderrad mit elektrischem Radnabenmotor, wobei an der Gabel oberhalb des Rades eine Batterie lösbar befestigbar ist, mit Versorgungs- und Steuerkabeln längs der Gabel zum Radnabenmotor hin, und der Lenker an der Gabel befestigt ist und mit einer Steuerung für die Leistungsabgabe des Radnabenmotors ausgestattet ist.

Anhand der Zeichnungen wird eine vorteilhafte Ausführung dieser elektrischen Antriebseinheit vorgestellt und in der nachfolgenden Beschreibung wird diese Antriebseinheit im Einzelnen beschrieben und die Funktion ihrer Bestandteile wird erklärt und erläutert.

Es zeigt:
- Figur 1 :: Einen Fahrrad-Rahmen mit Lenkkopfrohr eines auszurüstenden Fahrrades;
- Figur 2 :: Die Gabel der elektrischen Antriebseinheit mit Lenkkopf zum Einsetzen in das Lenkkopfrohr eines Rahmens, mit über dem Lenkkopf gehaltenem Lenkkopfrohr eines Rahmens, vor dem Überstülpen über den Lenkkopf;
- Figur 3 :: Die Gabel der elektrischen Antriebseinheit mit über den Lenkkopf gestülptem Lenkkopfrohr eines Rahmens und oberhalb der Gabel dargestellter Sicherungsbrücke;
- Figur 4 :: Die Gabel der elektrischen Antriebseinheit mit Lenkkopf und über den Lenkkopf gestülptem Lenkkopfrohr eines Rahmens, mit eingebauter Sicherungsbrücke, vor dem Verschrauben der Sicherungsschraube;
- Figur 5 :: Die Gabel der elektrischen Antriebseinheit mit Lenkkopf und über den Lenkkopf gestülptem Lenkkopfrohr eines Rahmens, mit fertiger Verschraubung;
- Figur 6 :: Eine Version mit verlängertem Lenkkopf an der Gabel für ein längeres Lenkkopfrohr;
- Figur 7 :: Die Gabel der elektrischen Antriebseinheit mit dem Rahmen verbunden, mit an den beiden Gabelrohren angebauten Lenkerstummeln zur Bildung des Lenkers;
- Figur 8 :: Die mechanische Verbindung eines Lenkerstummels mit dem Gabelrohr der Gabel in einer schematischen Zeichnung in einer Ansicht von oben;
- Figur 9 :: Eine Variante der Vordergabel mit teleskopisch gefederten Federbeinen;
- Figur 10 :: Das untere Ende der Gabel mit montiertem Vorderrad mit Nabenmotor;
- Figur 11 :: Eine komplette elektrische Antriebseinheit schematisch dargestellt, mit Gabel, Lenkkopf, Batterie, Vorderrad mit Nabenmotor und Lenkerstummeln, angebaut an das Lenkkopfrohr eines Rahmens eines Fahrrades oder Motorfahrrades;
- Figur 12 :: Ein Fahrrad mit einer an seinem Lenkkopfrohr angebauten elektrischen Antriebseinheit in einer Ansicht von vorne;
- Figur 13 :: Ein Fahrrad mit einer an seinem Lenkkopfrohr angebauten elektrischen Antriebseinheit in einer Ansicht von der Seite.

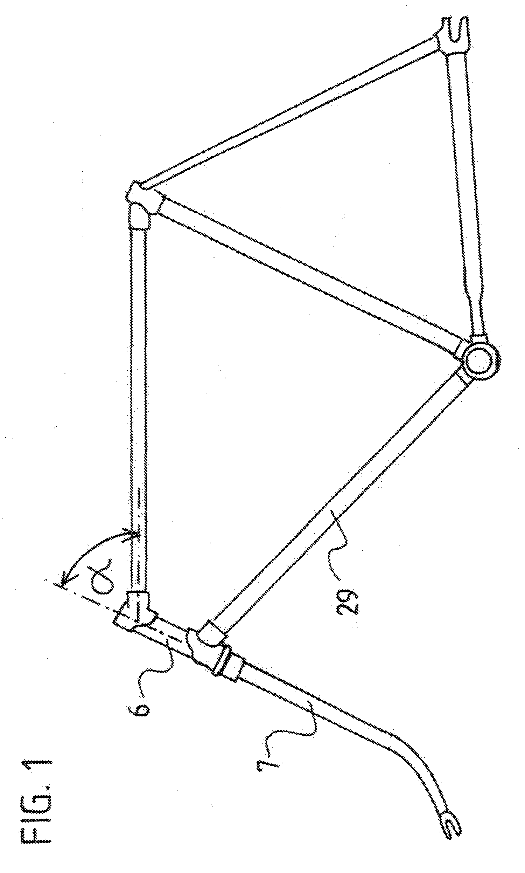

Die Figur 1 zeigt zunächst einen Rahmen 29 eines Fahrrades oder Motorfahrrades. Jedes Fahrrad oder Motorfahrrad weist einen derartigen Rahmen 29 auf, welcher als gemeinsames Merkmal an seinem vorderen Ende ein Lenkkopfrohr 6 aufweist, welches mit der Horizontalen bei Touren-, City- und Sportfahrrädern in der Regel einen Winkel α von zwischen 63° bis 67° einschliesst. In Ausnahmefällen mag dieser Winkel α von dieser Bandbreite abweichen, etwa bei Renn-, Saal-, Kunstfahr-, Radball- und Transportfahrrädern. Grosse Lenkkopfwinkel erleichtern die Langsamfahrt und kleine Lenkkopfwinkel beruhigen den Geradeauslauf und sind daher für höhere Geschwindigkeiten geeignet. Das Ziel dieser Erfindung ist es, eine elektrische Antriebseinheit zu schaffen, welche an beliebige solche Rahmen nachträglich anbaubar ist, womit ein herkömmliches Fahrrad, egal mit welchem Lenkkopfwinkel α es ausgestattet ist, sofort elektrifizierbar ist und damit sein Nutzwert auf einen Schlag enorm gesteigert wird. Diese nachträgliche Elektrifizierung kann mit dieser elektrischen Antriebseinheit besonders rasch und kostengünstig erreicht werden.

Bei einem herkömmlichen Fahrrad wird hierzu einzig die vordere Gabel mit ihrem Lenkkopf ausgebaut, mitsamt dem Vorderrad in der Gabel, sowie auf der oberen Seite des Lenkkopfrohres 6 der bestehende Lenker ausgebaut und entfernt. Der gesamte Rest des Fahrrades oder Motorfahrrades bleibt erhalten, sodass es also am vorderen Ende mit dem nun freien Lenkkopfrohr 6 endet. Damit kann jedes herkömmliche Fahrrad oder Motorfahrrad mit wenigen Handgriffen für die Nachrüstung mit der elektrischen Antriebseinheit vorbereitet werden.

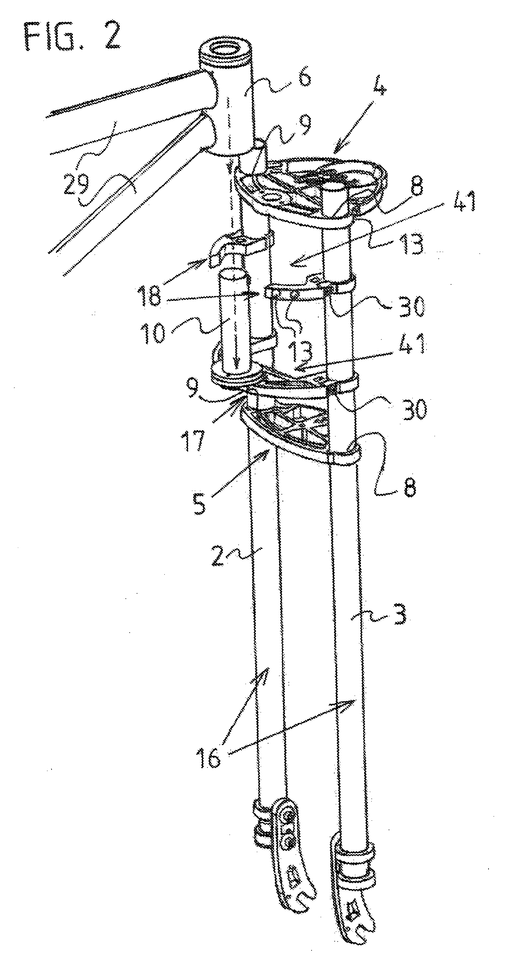

In Figur 2 ist nun die spezielle Gabel 16 dieser elektrischen Antriebseinheit gezeigt. Sie besteht aus zwei Gabelrohren 2,3, das Gabelrohr 2 für die in Fahrtrichtung gesehen linke Radseite, und das Gabelrohr 3 für die in Fahrtrichtung gesehen rechte Radseite. Obwohl die Gabelrohre 2,3 hier starre Rohre sind können auch Gabelrohre mit einer Teleskop-Federung eingesetzt werden, wie sie als Federbeine gebräuchlich sind. Die beiden Gabelrohre 2,3 sind an zwei Stellen mittels mechanischer Brücken 4,5 verbunden und miteinander verschraubt. Diese Brücken 4,5 sind im gezeigten Beispiel aus Edelstahl gefertigt und zur Gewichtseinsparung mit Aussparungen versehen, welche durch Ausfräsen erzielt werden. Anstelle eines Ausfräsens kann ein Herausschneiden mittels Laser oder Wasserstrahl treten, oder es können solche Brücken aus Druckguss- oder Blechkonstruktionen gefertigt werden. Die Brücken 4,5 weisen je zwei Löcher 8,9 auf, die als Spannbriden ausgelegt sind. Durch Verspannung derselben mittels Schrauben, vorzugsweise Imbusschrauben 13, lassen sich die Brücken 4,5 fest mit den Gabelrohren 2,3 verspannen. Ausserdem ermöglicht es diese Art der Verspannung, die Brücken 4,5 in verschiedenen Höhenlagen an den Gabelrohren 2,3 zu platzieren, je nach den gegebenen Verhältnissen eines auszurüstenden Rahmens 29 eines nachzurüstenden Fahrrades oder Motorfahrrades. Eine weitere Befestigungsbrücke 17 dient als Träger für den Lenkkopf 10 und darüber eine Brücke 18 zum Sichern des Lenkkopfes 10. Der Lenkkopf 10 selbst besteht aus einem Rohrstummel mit zentraler Gewindestange. Auch die Brücken 17,18 sind mittels Verschraubungen durch Imbusschrauben 30 mit den Gabelrohren 2,3 verspannt. Der Lenkkopf 10 sitzt senkrecht auf dieser unteren Brücke 17 und ragt von ihr aus nach oben. Oberhalb des Lenkkopfes 10, in axialer Richtung, erkennt man das Lenkkopfrohr 6 des Rahmens 29 eines auszurüstenden Fahrrades, vor dem Überstülpen dieses Lenkkopfrohres 6 über den Lenkkopf 10. Die untere Brücke 5 an der Gabel 16 dient zum Tragen einer von vorne einzuschiebenden Batterie, wie das später noch klar wird. Die obere Brücke 4 bildet eine obere Begrenzung für die einzuschiebende Batterie. Zu beachten ist, dass die dazwischen angeordneten Brücken 17 und 18 auf ihrer Vorderseite, also jener Seite, die gegen die Fahrtrichtung hin zeigt, je eine U-förmige Ausnehmung 41 bilden, zur Aufnahme der von vorne einzuschiebenden Batterie.

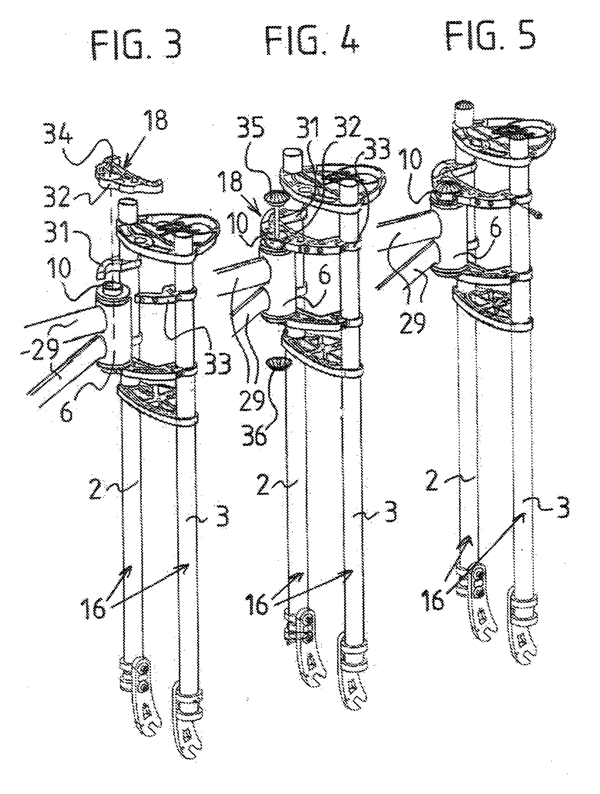

Als Nächstes zeigt die Figur 3 die Gabel 16 mit über den Lenkkopf 10 gestülptem Lenkkopfrohr 6 des Rahmens 29, und vor dem Montieren der oben an das Lenkkopfrohr 6 anschliessenden Befestigungsbrücke 18. Diese besteht hier aus drei miteinander verschraubbaren Teilen 31,32,33. Das mittlere Teil 32 weist ein Loch 34 auf, mit welchem es von oben über den Lenkkopf 10 stülpbar ist. Hernach wird es mit den beidseits anschliessenden Brückenteilen 31 und 33 verschraubt. Damit ist der Lenkkopf 10 gegenüber der Gabel 16 stabil aber verschwenkbar gelagert.

Diese Situation mit der fertig verschraubten Befestigungsbrücke 18 ist in Figur 4 dargestellt. Sie zeigt die Gabel 16 der elektrischen Antriebseinheit mit Lenkkopf 10 mit über denselben gestülptem Lenkkopfrohr 6 eines Rahmens 29, mit eingebauter Befestigungsbrücke 18 aus diesen drei Teilen 31,32,33. Diese Lagerung wird gesichert durch eine von oben eingesetzte Sicherungsschraube 35 und von unten aufgesetzter zugehöriger Kontermutter 36, die hier beim Einsetzen dargestellt ist.

Die Figur 5 zeigt schliesslich die Gabel 16 der elektrischen Antriebseinheit mit Lenkkopf 10 mit über denselben gestülptem Lenkkopfrohr 6 eines Rahmens 29 mit fertigen Verschraubungen, womit die Verbindung und Sicherung mit dem Rahmen 29 vollständig ist.

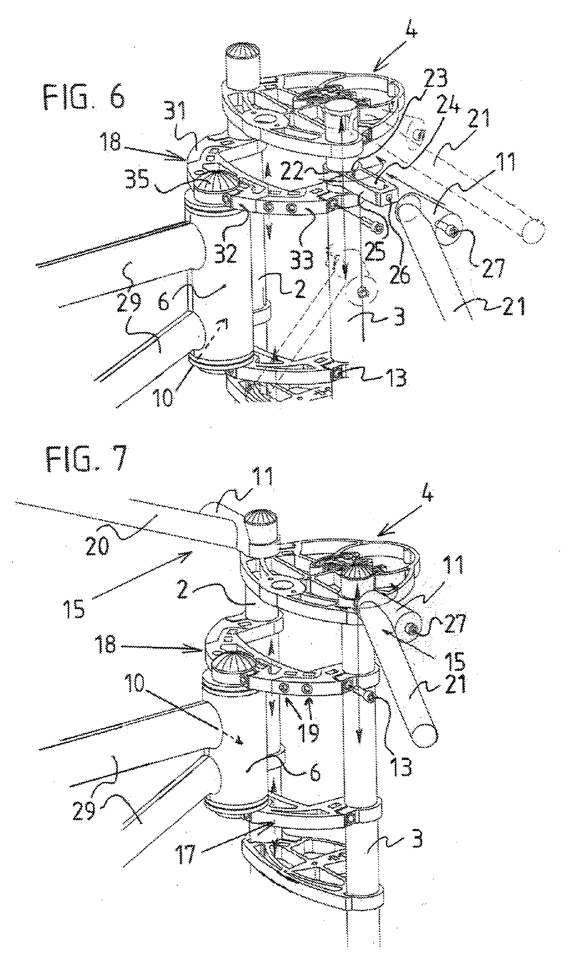

Die Figur 6 zeigt eine Version mit verlängertem Lenkkopf für ein Fahrrad mit einer Gabel mit längerem Lenkkopfrohr 6. Es ist klar, dass die Länge des Lenkkopfes an der elektrischen Antriebseinheit auf jedes beliebige Mass gefertigt werden kann, oder man schneidet seine Länge von Fall zu Fall je nach den Erfordernissen ab einer grossen Standardlänge zu. Die Befestigungsbrücke 18 aus den drei Teilen 31,32,33 kann an den Gabelrohren 2,3 in ihrer Höhenlage verstellt werden, sodass sie auf jede Länge eines Lenkkopfes angepasst werden kann und dann mit ihrem mittigen Loch das obere Ende des Lenkkopfes umgreift, wonach diese Verbindung noch mit der Sicherungsschraube 35 gesichert wird.

In dieser Figur 6 ist der anzubauende Lenkerstummel 21 für die rechte Lenkerseite mit durchgezogenen Linien eingezeichnet. Strichliniert ist er an zwei weiteren möglichen Montagepositionen angedeutet. Er ist also über einen grossen Höhenbereich am Gabelrohr 3 befestigbar. Zur Montage bzw. zum Anbau des Lenkerstummels 21 an das Gabelrohr 3 dient eine Muffe 22 mit Unterbruchsstelle 23 und beidseits derselben nach aussen ragenden Fortsätzen 24,25, die vorne verbunden sind. In dieser Verbindung sitzt eine Gewindebuchse 26. Der Lenkerstummel 21 mündet in spitzem Winkel in ein Spannrohr 11, welches am vorderen Ende in eine konkave Einbuchtung ausgeformt ist, die hier allerdings nicht sichtbar ist. Dieses Spannrohr 11 wird über die Fortsätze 24,25 gestülpt und mittels seiner endseitigen Spannschraube 27 mit der Gewindebuchse 26 im Verbindungsstück der beiden Fortsätze 24,25 verspannt. Dadurch werden die beiden Fortsätze 24,25 unter Zusammenpressen der Muffe 22 um die Unterbruchstelle 23 gegeneinander hin gespannt und der Lenkerstummel 21 ist dadurch fest und sicher mit dem Gabelrohr 3 verspannt. Der Lenkerstummel 21 kann also sowohl in der Höhe wie durch ein Verdrehen der Muffe 22 am Gabelrohr 3 verstellt werden, sodass für jeden Fahrer eine ideale Lenkereinstellung möglich ist.

Die Figur 7 zeigt die fertig montierten Lenkerstummel 20 und 21 an den Gabelrohren 2,3 in einer bestimmten Einstell-Lage zur Bildung des Lenkers 15. Der Lenker 15 ist also hier keine durchgehende Lenkerstange, sondern er besteht aus zwei separat montierbaren und in jeder Lage mittels der Spannrohre 11 einstellbaren Lenkerstummeln 20,21.

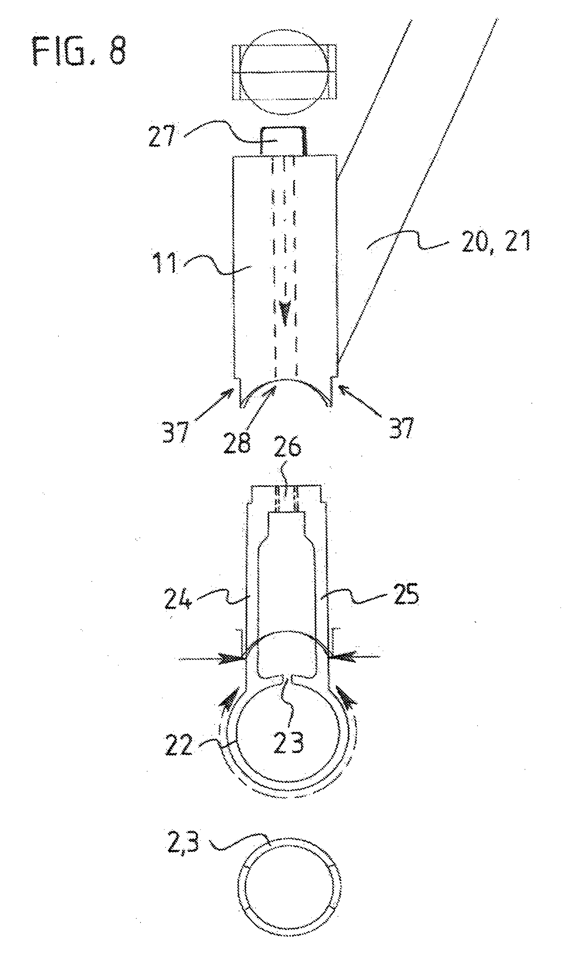

In Figur 8 ist die Verspannung der Lenkerstummel 20,21 mit dem Gabelrohr 2,3 in einer vergrösserten Darstellung in einer Ansicht von oben gezeigt. Die Muffe 22 wird von oben über das Gabelrohr 2 oder 3 gestülpt. Je nach dem, wo der Lenker positioniert sein soll, kann die Muffe 22 zwischen der oberen Brücke 4 der Gabelrohre 2,3 und der Brücke 18 für die Lagerung des Lenkkopfes 10 eingebaut werden, oder aber oberhalb der oberen Brücke 4 über das nach oben herausragende Gabelrohr 2,3. Die Muffe 22 ist um das Gabelrohr 2,3 verdrehbar, wie mit den Pfeilen angedeutet. Die beiden Fortsätze 24,25 beidseits der Unterbruchsstelle 23 ragen dann seitlich vom Gabelrohr 2,3 weg. Sie dienen als Träger für das Spannrohr 11, an welchem der Lenkerstummel 20,21 in spitzem Winkel nach aussen abzweigt. Das Spannrohr 11 weist ein konkav geformtes Ende 28 auf, mit seitlichen Ausnehmungen 37, sodass es passgenau an die Muffe 22 und das Gabelrohr 2,3 anschliessen kann, wobei die Ausnehmungen 37 über der Muffe 22 zu liegen kommen. Das Spannrohr 11 wird mittels seiner Spannschraube 27 mit der Gewindehülse 26 in der äusseren Verbindung der Fortsätze 24,25 verspannt. Dadurch pressen seine Ränder auf die Muffe 22, sodass diese das Gabelrohr 2,3 klemmend umschliesst.

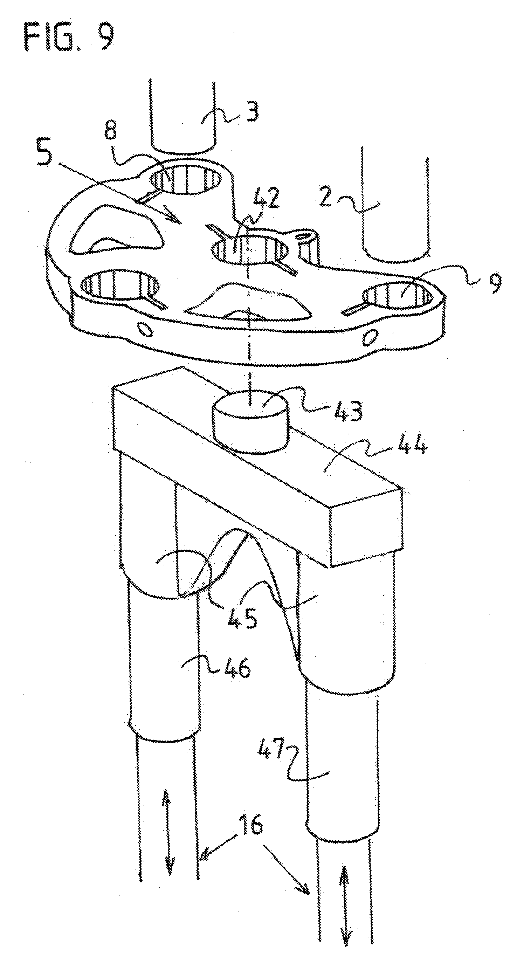

Die Figur 9 zeigt noch eine alternative untere Brücke 5 für die Gabelrohre 2,3. Diese Brücke 5 weist hier ein zentrales Loch 42 auf, zur Aufnahme eines zentralen Lenkzapfens 43 an einer Verbindungsbrücke 44, welche spezielle teleskopische Federbeine 46,47 an deren oberen Ende verbindet, die hierzu in einer Fassung 45 stecken und darin mittels Verschraubungen gesichert sind. In die beiden äusseren, mittels Verschraubungen verspannbaren Löcher 8,9 an der Brücke 5 passen die unteren Enden von in diesem Fall verkürzten Gabelrohren 2,3. Durch Verschrauben des zentralen Loches 42 mit dem Lenkzapfen 43 auf der Verbindungsbrücke 44 werden die Gabelrohre 2,3 verschwenksicher mit den teleskopischen Federbeinen 46,47 verbunden. Damit lässt sich die Antriebseinheit auch mit einer herkömmlichen gefederten Vordergabel verbinden.

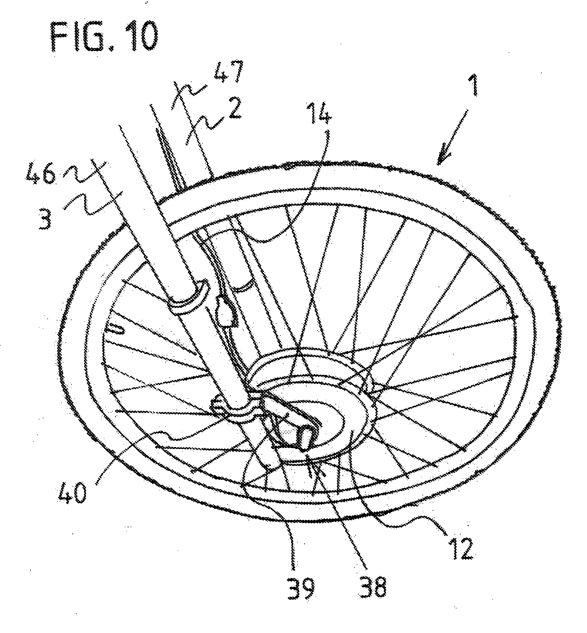

Die Figur 10 zeigt den eigentlichen Antrieb, nämlich den Nabenmotor 12 am Vorderrad 1, welches dann mittels der Klemmhalterung 38 an die unteren Enden der Gabelrohre 2,3 bzw. Federbeine 46,47 angebaut wird. Die Klemmhalterung 38 wird von unten über die unteren Enden der Gabelrohre 2,3 bzw. Federbeine 46,47 gestülpt und sie trägt die Vorderradachse in hierfür vorgesehenen Lagerungen. Die Klemmhalterung 38 bildet auf beiden Seiten des Rades 1 je einen von der Achse aus nach oben ragenden Hebel 39, dessen Ende dann mittels einer Rohrschelle 40 mit dem Gabelrohr 3 bzw. Federbein 46 verspannt ist. Der Hebel 39 nimmt somit das Gegenmoment des Nabenmotors auf und leitet es in das Gabelrohr 3 bzw. Federbein 46. Die von der Batterie her kommenden Stromversorgungskabel 14 und die vom Lenker her kommenden Steuerkabel 14 sind längs der Gabelrohre 2,3 bzw. Federbeine 46,47 oder im Innern derselben verlaufend nach unten zum Nabenmotor 12 geführt.

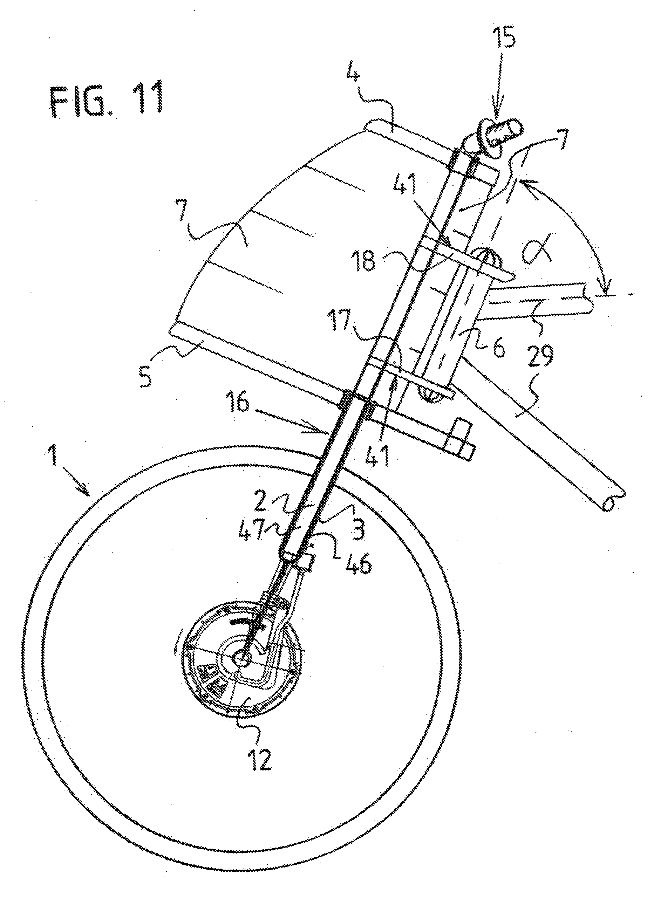

Die Figur 11 zeigt die komplette elektrische Antriebseinheit schematisch dargestellt, mit Gabelrohren 2,3 bzw. Federbeinen 46,47, Lenkkopf 10, Batterie 7, Vorderrad 1 mit Nabenmotor 12 und Lenker 15, angebaut an das Lenkkopfrohr 6 eines Rahmens 29 eines Fahrrades oder Motorfahrrades. Die Batterie 7 weist hier ein Kunststoffgehäuse auf, welches mit einem besonderen Design gestaltet sein kann, damit es formschön zum Rest der Konstruktion passt. Die Batterie 7 sitzt auf der unteren Brücke 5 an der Gabel und ist unter die obere Brücke 4 eingeschoben und schliesst an die U-förmigen Ausnehmungen 41 an den zwischenliegenden Brücken 17 und 18 an bzw. passt in diese hinein. Diese Ausnehmungen 41 sind in Figur 2 ersichtlich. Die Batterie 7 erstreckt sich daher teilweise zwischen den beiden Gabelrohren 2,3 hindurch und ihr Schwerpunkt ist deshalb entsprechend näher an die Gabel 16 gerückt. Die Stromanschlüsse können fix an den Brücken vorgesehen werden, sodass beim Einsetzen der Batterie 7 automatisch die Kontakte zum Antrieb erstellt werden. Die Batterie 7 lässt sich zwischen den Brücken 4,5 mittels einer sicherbaren Schnalle sichern. Jedenfalls aber kann die Batterie 7 jederzeit mit einfachen Handgriffen von der Antriebseinheit entfernen werden, um sie hernach an eine Ladestation anzuschliessen. Die hier gezeigten Platzverhältnisse vor bzw. zwischen der Gabel 16 ermöglichen das problemlose Unterbringen einer Batterie 7 mit einer Betriebsspannung von 36 bis 48V und einer Stromstärke von 9 bis 24A, ohne dass die Fahrtauglichkeit beeinträchtigt wird, in dem etwa die Lenkung zu schwergängig oder unstabil würde.

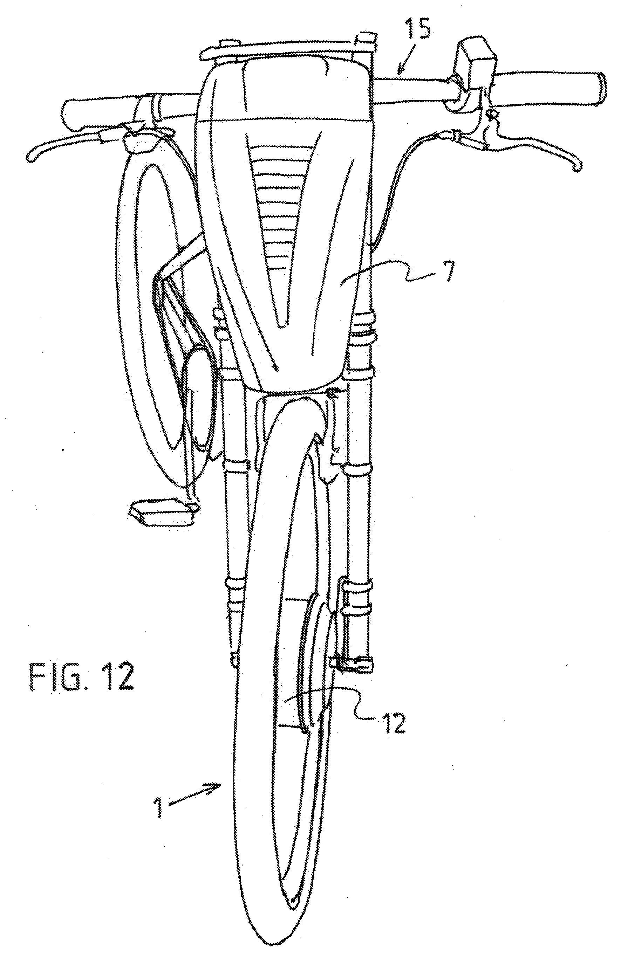

Die Figur 12 zeigt ein derartig nachgerüstetes Fahrrad mit einer an seinem Lenkkopfrohr angebauten elektrischen Antriebseinheit in einer Ansicht von vorne. Die Batterie 7 nimmt den Raum zwischen dem Lenker 15 und dem Vorderrad 1 ein. Dort ist genügend Raum für eine entsprechend grosse Batterie 7 vorhanden, die ausserdem mit einem optisch ansprechend gestalteten Gehäuse untergebracht sein kann, wie hier gezeigt. Die Steuerung der Leistung erfolgt entweder durch einen federbelasteten Schwenkhebel am Lenker 15 oder durch einen drehbaren Lenkergriff, ähnlich einem Gasgriff eines Motorrades.

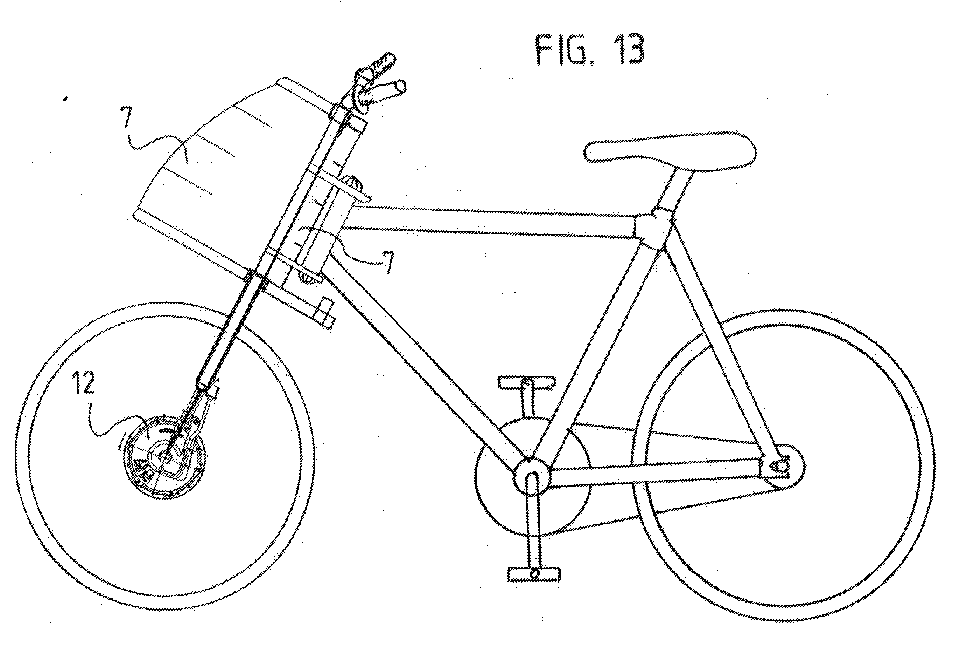

In Figur 13 ist noch ein Fahrrad mit einer an seinem Lenkkopfrohr angebauten elektrischen Antriebseinheit in einer Ansicht von der Seite gezeigt. Die Batterie 7 kann windschlüpfrig geformt sein oder Ansprüche an ein besonderes Design erfüllen, je nach Gestaltung.

Die hier gezeigte elektrische Antriebseinheit kann innerhalb etwa einer Stunde an den Rahmen eines herkömmlichen Fahrrades oder Motorfahrrades angebaut werden, und somit kann dieses rasch elektrifiziert werden und sein Nutzwert wird auf einen Schlag enorm gesteigert.

## Patentansprüche

1. Elektrische Antriebseinheit für ein Fahrrad oder Motorfahrrad, bestehend aus einer Baueinheit aus Gabel (16) und Lenkkopf (10), welcher in das Lenkkopfrohr (6) eines Rahmens (29) einsetzbar ist und in diesem schwenkbar sicherbar ist, sowie einem in die Gabel (16) eingesetzten Vorderrad (1) mit elektrischem Radnabenmotor (12), wobei an der Gabel (16) oberhalb des Rades (1) eine Batterie (7) lösbar befestigbar ist, mit Versorgungs- und Steuerkabeln (14) längs der Gabel (16) zum Radnabenmotor (12) hin, und der Lenker (15) an der Gabel (16) befestigt ist, und mit einer Steuerung für die Leistungsabgabe des Radnabenmotors (12) ausgestattet ist, ***dadurch gekennzeichnet,* dass** die Gabel (16) aus zwei parallel zueinander verlaufenden Gabelrohren (2,3) besteht, die an mindestens zwei Stellen mit je einer mechanischen Brücke (4,5) miteinander verbunden sind, und der Lenkkopf (10) aus einem Rohrstummel mit zentraler Gewindestange besteht, welcher mit seinem unteren Ende auf einer mechanischen Brücke (17) sitzt, welche die beiden Gabelrohre (2,3) verbindet, wobei eine weitere mechanische Brücke (18) vorhanden ist, welche an den Gabelrohren (2,3) höhenverstellbar befestigt ist und eine Verschraubung (19) einschliesst, welche auf das obere Ende des Lenkkopfes (10) absenkbar ist und mit dessen Gewindestange zur Sicherung des Lenkkopfes (10) in einem Lenkkopfrohr (6) eines Rahmens (29) verschraubbar ist.

2. Elektrische Antriebseinheit für ein Fahrrad oder Motorfahrrad nach Anspruch *1,* ***dadurch gekennzeichnet,* dass** die Gabel (16) aus zwei parallel zueinander verlaufenden Gabelrohren (2,3) besteht, die an mindestens zwei Stellen mit je einer mechanischen Brücke (4,5) miteinander verbunden sind, und die untere Brücke (5) zwei verspannbare Löcher (8,9) für die unteren Enden von verkürzten Gabelrohren (2,3) aufweist, sowie ein zentrales verspannbares Loch (42) zur Aufnahme eines des zentralen Lenkzapfens (43) an einer Verbindungsbrücke (44), welche sich nach unten erstreckende teleskopische Federbeine (46,47) an deren oberen Ende verbindet, sodass diese Federbeine (46,47) den unteren Teil der Gabel (16) bilden.

3. Elektrische Antriebseinheit für ein Fahrrad oder Motorfahrrad, nach einem der vorangehenden Ansprüche, ***dadurch gekennzeichnet,* dass** die Gabel (16) aus zwei parallel zueinander verlaufenden Gabelrohren (2,3) mit wahlweise unten anschliessenden Federbeinen (46,47) besteht, wobei diese Gabelrohre (2,3) an mindestens zwei Stellen mit je einer mechanischen Brücke (4,5) miteinander verbunden sind, und dass der Lenker (15) aus zwei Lenkerstummeln (20,21) besteht, je an einem der Gabelrohre (2,3) angebaut sind, indem eine Muffe (22) von oben über das Gabelrohr (2,3) gesteckt ist, welche an einer Stelle (23) unterbrochen ist, und beidseits der Unterbrechungsstelle (23) je einen Fortsatz (24,25) aufweist, wobei die beiden Fortsätze (24,25) parallel zueinander verlaufen und am Ende verbunden sind und dort eine Gewindebuchse (26) aufweisen, dass ein Spannrohr (11) mit konkaver Einbuchtung (28) an seinem vorderen Ende über die Fortsätze (24,25) steckbar ist und an seinem hinteren Ende mit der endseitigen Verbindung der Fortsätze (24,25) und der dortigen Gewindebuchse (26) mittels einer Schraube (27) verspannbar ist, sodass die Muffe (22) am Gabelrohr (2,3) zusammenklemmbar ist, und dass der Lenkerstummel (20,21) in einem spitzen Winkel in das Spannrohr (11) einmündet und mit ihm verschweisst ist.

4. Elektrische Antriebseinheit für ein Fahrrad oder Motorfahrrad nach einem der vorangehenden Ansprüche, ***dadurch gekennzeichnet,* dass** das in die Gabel (16) eingesetzte Vorderrad (1) mit einem elektrischen Radnabenmotor (12) ausgerüstet ist, wobei an der Gabel (16) oberhalb des Rades (1) eine Batterie (7) lösbar befestigt ist, indem die Gabel (16) aus zwei Gabelrohren (2,3) mit wahlweise unten anschliessenden Federbeinen (46,47) besteht, welche Gabelrohre (2,3) an zwei Stellen mit einer Brücke (4,5) verbunden sind, und die Batterie (7) von vorne zwischen diese zwei Brücken (4,5) passgenau einschiebbar ist und mittels federbelasteten Schnapp- oder Schnallenverschlüssen in der eingeschobenen Lage sicherbar ist, wobei sie soweit einschiebbar ist, dass sie sich bis zwischen die beiden Gabelrohre (2,3) erstreckt, zur Reduktion des Trägheitsmomentes der Gabel (16) beim Schwenken um das Lenkkopfrohr (6) eines mit der Antriebseinheit ausgerüsteten Rahmens (29).

5. Elektrische Antriebseinheit für ein Fahrrad oder Motorfahrrad nach einem der vorangehenden Ansprüche, ***dadurch gekennzeichnet,* dass** die Versorgungs- und Steuerkabel (14) längs der Gabelrohre (2,3) bzw. Federbeine (46,47) zum Radnabenmotor (12) geführt sind, und die Steuerung für die Leistungsabgabe des Radnabenmotors (12) aus einem Drehgriff an einem der Lenkerstummel (20,21) besteht.

6. Elektrische Antriebseinheit für ein Fahrrad oder Motorfahrrad nach einem der Ansprüche 1 bis 4, ***dadurch gekennzeichnet,* dass** das Versorgungs- und Steuerkabel (14) längs der Gabelrohre (2,3) bzw. Federbeine (46,47) oder in denselben zum Radnabenmotor (12) geführt sind, und die Steuerung für die Leistungsabgabe des Radnabenmotors (12) aus einem federbelasteten Schwenkhebel an einem der Lenkerstummel (20,21) besteht.

7. Elektrische Antriebseinheit für ein Fahrrad oder Motorfahrrad nach einem der vorangehenden Ansprüche, ***dadurch gekennzeichnet,* dass** die Brücken (4,5), welche die beiden Gabelrohre (2,3) der Gabel (16) verbinden, ein-oder mehrteilige, aus Edelstahl gefertigte Frästeile sind und mittels Löcher (8,9) mit Verschraubungen mit den Gabelrohren (2,3) lösbar verspannbar sind, sodass sie an denselben höhenverstellbar befestigbar sind.

8. Elektrische Antriebseinheit für ein Fahrrad oder Motorfahrrad nach einem der vorangehenden Ansprüche, ***dadurch gekennzeichnet,* dass** die Brücken (4,5), welche die beiden Gabelrohre (2,3) der Gabel (16) verbinden, Druckgussteile sind, welche mit Schraubenverbindungen zusammensetzbar sind und mittels Löcher (8,9) mit Verschraubungen mit den Gabelrohren (2,3) lösbar verspannbar sind, sodass sie an denselben höhenverstellbar befestigbar sind.

## Claims

1. Electric drive unit for a bicycle or motor bicycle, consisting of an assembly unit comprising a fork (16) and a steering head (10) which is insertable into the head pipe (6) of a frame (29) and pivotally secured within the same, and a front wheel (1) with electric hub motor (12) mounted on the fork (16), whereby a battery (7) is detachably fastened on that fork (16) above the wheel (1), with supply- and control wires (14) along the fork (16) leading to the electric hub motor (12), and the handle bar (15) attached to the fork (16), with a control for the power output of the hub motor (12), ***characterized in that*** the fork (16) consists of two fork tubes (2,3) extending parallel to each other, which are attached to each other via mechanical bridges (4,5) on at least two locations, and that the steering head (10) comprises a pipe stub with a central threaded rod, said steering head (10) sitting on mechanical bridge (17) with its lower end (17), said mechanical bridge (17) connecting the two fork tubes (2,3), whereby a further mechanical bridge (18) is provided which is mounted adjustable in height on said fork tubes (2,3) and comprise a screw fixing (19) which is lowerable onto the upper end of the steering head (10) and screwable with the threaded rod of said steering head (10) for securing the steering head (10) in a steering head pipe (6) of a frame (29).

2. Electric drive unit for a bicycle or motor bicycle according to claim 1, **characterized in that** the fork (16) comprises two parallel running fork tubes (2,3) which are connected to each other on at least two different locations by at two mechanical bridges (4,5) each, and that the lower bridge (5) comprises two braced holes (8,9) for the receipt of the bottom ends of shortened fork tubes (2,3), as well as a central braced hole (42) for receiving a central swivel pin (43) on a connecting bridge (44) connecting downwardly extending telescopic struts (46,47) at their upper end so that these struts (46,47) form to the lower part of the fork (16).

3. Electric drive unit for a bicycle or motor bicycle according to any one of the preceding claims, ***characterized in that*** the fork (16) comprises two parallel running fork tubes (2,3) with optional bottom adjoining spring legs (46,47), wherein these fork tubes (2,3) are connected at least at two points, each with a mechanical bridge (4.5), and that handle bar (15) consists of two handle bars (20,21) which each at one of the fork tubes (2,3) are attached to each other by plugging a sleeve (22) from above the fork column (2,3), is inserted, which is interrupted at a location (23), having a respective extension (24,25) at both sides of the disruption place (23), wherein the two extensions (24,25) are parallel to each other and connected at the end and having therein a threaded socket (26), so that a tensioning tube (11) with a concave indentation (28) at its front end is plugable over the extensions (24,25) and at its rear end to join the ends of the extensions (24,25) which comprise a threaded socket (26) with which they can be clamped by screws (27), so that the sleeve (22) on the fork tube (2,3) is clampable together, so that the handle bar snag (20,21) flows into the clamping tube (11) in an acute angle and is welded to it.

4. Electric drive unit for a bicycle or motor bicycle according to any of the preceding claims, ***characterized in that*** the front wheel (1) which is inserted into the fork (16) is equipped with an electric hub motor (12), wherein a battery (7) is detachably attached to the fork (16) above the wheel (1), whereby the fork (16) consists of two fork tubes (2,3) with optional subsequent bottom struts (46,47), of which the fork tubes (2,3) are connected at two locations with a bridge (4.5), and the battery (7) is insertable from the front in between these two bridges (4,5) precisely and is secured by means of spring-loaded snap fits or buckle closures in the inserted position, and is insertable to this extent that it sits in between the two fork tubes (2,3) in order to reduce the moment of inertia of the fork (16) when panning around the steering head tube (6) of a frame (29) which is equipped with the drive unit.

5. Electric drive unit for a bicycle or motor bicycle according to any of the preceding claims, ***characterized in that*** the supply and control wires (14) along the fork tubes (2, 3), respectively bottom struts (46, 47) are guided to the wheel hub motor (12), and the control for the power output of the hub motor (12) is made of a rotary handle at a handle bar snag (20,21).

6. Electric drive unit for a bicycle or motor bicycle according to any one of claims 1 to 4, ***characterized in that*** the supply and control wires (14) are guided along the fork tubes (2, 3) and respectively spring legs (46, 47), or in the same towards the hub motor (12), and the control for the power output of the hub motor (12) consists of a spring-loaded pivoted lever on one of the handlebar (20, 21).

7. Electric drive unit for a bicycle or motor bicycle according to any of the preceding claims, ***characterized in that*** the bridges (4, 5), which connect the two fork tubes (2, 3) of the fork (16), are one-part or more multipart pieces machined parts, made of stainless steel, which are releasably clamped by means of holes (8,9) with screws to the the fork tubes (2, 3) so that they are fastened adjustable in height on the same.

8. Electric drive unit for a bicycle or motor bicycle according to any of the preceding claims, ***characterized in that*** the bridges (4, 5) which connect the two fork tubes (2,3) of the fork (16) are casting parts which are composable by screw connections and having holes (8.9) and screws so that they are releasably clampable onto the fork tubes (2,3) so that they are fastened adjustable in height to the same.

## Revendications

1. Ensemble propulsive électrique pour un vélo ou une motocyclette, consistant d' une unité physique comprenant une fourche (16) et une tête chercheuse (10) qui est importable dans un tuyaux d'une tête chercheuse (6) d' un cadre (29) et qui est assurable pivotant dans le même, et une roue avant (1) un moyeu de roue électrique (12) attaché sur la fourche (16), cependant une batterie (7) est attachée de manière détachable sur cette fourche (16) au dessus de la roue (1) avec des câbles de fourniture et de contrôle (14) le long de la fourche (16) aboutant au moyeu de la roue électrique (12), et le guidon (15) étant attaché à la fourche (16), équipé avec une conduite automatique pour la charge du moyeu de roue électrique (12), ***caractérisé en ce que*** la fourche (16) consiste de deux tuyaux de fourches (2,3) étant chacun connecté sur au moins deux endroits parmi un pont mécanique (4,5), et la tête chercheuse (10) consistant d' un tuyau moignon avec une tige filetée centrale qui se trouve avec son bout en dessous sur un pont mécanique (17) qui connecte les deux tuyaux de fourches (2,3), cependant un pont mécanique supplémentaire (18) existe qui est fixé réglable en hauteur aux tuyaux de fourche (2,3), comprenant une fermeture (19) qui est abaissable vers le bout en haut de la tête chercheuse (10) et qui peut être boulonnée avec sa tige filetée pour securer la tête chercheuse (10) dans un tuyaux d' une tête chercheuse (6) d' un cadre (29).

2. Ensemble propulsive électrique pour un vélo ou une motocyclette selon revendication 1, ***caractérisé en ce que*** la fourche (16) comprend deux tuyaux de fourches (2,3) parallèles qui sont connectées l'une avec l'autre parmi au moins deux ponts mécaniques (4,5) à au moins deux endroits différents, et que le pont en dessous (5) comprend deux trous haubanés (8,9) pour les bouts en dessous de tuyaux à fourches raccourcis (2,3), ainsi que un trou centralement haubanable (42) pour accueillir un des bouchons à conduire (43) à un point de liaison (44) qui connecte les jambes de force (46,47) télescopiques qui s'débordent en bas à leur fin au-dessus, ainsi que ces jambes de force (46,47) forment la partie basse de la fourche (16).

3. Ensemble propulsive électrique pour un vélo ou une motocyclette selon une des revendications précitées, ***caractérisé en ce que*** la fourche (16) consiste de deux tuyaux de fourches (2,3) avec jambes de force (46,47) connectées en bas, cependant ces tuyaux à fourches (2,3) sont connectés l'un avec l'autre au moins en deux endroits avec un pont mécanique (4.5), et que le guidon (15) consiste en deux moignons de guidon (20,21) desquels chacun est accolé à respectivement un des tuyaux à fourche (2,3) à coup de une tétine (22) interrompue à un endroit (23) fixée au dessus du tuyaux de fourche (2,3), ayant de part et d'autre de la place interrompue un prolongement respectivement (24,25), cependant les deux prolongements (24,25) se déroulent parallèlement et sont connectés au bout et possèdent d'un filetage (26), ainsi que un tuyaux de serrage (11) avec une anfractuosité concave (28) est enfichable à son bout à l'avant sur les prolongements (24,25) et est haubanable avec le filetage par une vis (27), de façon à ce que la tétine (22) est grippé au tuyaux de fourche (2,3), et le moignon de guidon (20,21) débouche dans le tuyaux de serrage (11) dans un angle aigu et est soudé avec celui.

4. Ensemble propulsive électrique pour un vélo ou une motocyclette selon une des revendications précitées, ***caractérisé en ce que*** la roue avant (1) qui est insérée dans la fourche (16) est équipée avec un moyeu de roue électrique (12), cependant une batterie (7) est detachablement attachée à la fourche (16) au dessus de la roué (1), cependant la fourche (16) consiste de deux tuyaux de fourches(2,3) avec jambes de force supplémentaires optionnelles (46,47), dont les tuyaux de fourches (2,3) sont connectées à deux endroits avec un pont (4,5), et une batterie (7) est fixée détachablement et la fourche (16) consiste de deux tuyaux de fourches (2,3) avec des jambes de force (46, 47) connectées en bas optionnellement, et les tuyaux de fourches (2,3) sont connectées avec un pont (4,5) à deux endroits et une batterie (7) est insérable fait sur mesure et celle-là est insérable avec l'aide de fermoirs à cliquet et fermoirs à boucles dans la position insérée, et elle est insérable jusqu'au point où elle s'étend entre les deux tuyaux de fourches (2,3) pour réduire le moment d'inertie de la fourche (16) pendant que le cadre (29) équipé avec une ensemble propulsive est tourné autour d' un tuyaux d'une tête chercheuse (6).

5. Ensemble propulsive électrique pour un vélo ou une motocyclette selon une des revendications précitées, ***caractérisé en ce que*** le câble de fourniture et le câble de contrôle (14) le long des tubes fourches (2, 3), respectivement des jambes de force (46, 47), sont guidés vers le moyeu de roue électrique (12), et le contrôle pour la charge du moyeu de roue électrique (12) consiste d'une poignée sur un moignon de guidon (20,21).

6. Ensemble propulsive électrique pour un vélo ou une motocyclette selon d'une des revendications 1 à 4, ***caractérisé en ce que*** le câble d'alimentation et le câble de contrôle (14) est guide le long des tubes de fourche (2, 3) et respectivement les jambes de fourche (46, 47), ou vers le moyeu de roue électrique (12), et le contrôle pour la charge du moyeu de roue électrique (12) consiste d'un moignon de guidon (20, 21) sur un bras de levier à ressort.

7. Ensemble propulsive électrique pour un vélo ou une motocyclette selon une des revendications précitées, ***caractérisé en ce que*** les ponts (4, 5), qui connectent les deux tuyaux de fourches (2, 3) avec la fourche (16), sont des parties de fraisage faites en acier affiné qui sont fixables détachablement parmi des trous (8,9) avec des fermetures avec les tuyaux de fourches (2,3) ainsi que ils sont fixables réglables en hauteur sur celles.

8. Ensemble propulsive électrique pour un vélo ou une motocyclette selon une des revendications précités, **caractérisé en ce que** les ponts (4,5) qui connectent les deux tuyaux de fourches (2, 3) de la fourche (16), sont des pièces de fontes injectées qui sont assemblables et fixables parmi des trous (8,9) avec des fermetures avec les tuyaux de fourche (2,3) de façon détachable, ainsi que ils sont fixables réglables en hauteur sur les-mêmes.
